# EUROPÄISCHE PATENTSCHRIFT

(11) **EP 0 659 623 B1**
(45) Veröffentlichungstag und Bekanntmachung des Hinweises auf die Patenterteilung: **10.09.1997**
(21) Anmeldenummer: 94119911.9
(22) Anmeldetag: 16.12.1994
(51) Int. Cl.: B60T 15/18

(54) **Überwachungseinrichtung für eine Bremsleitung an Nutzfahrzeugen**
Control device for a brake pipe of commercial vehicles
Dispositif de contrôle pour une conduite de freinage des véhicules utilitaires

(30) Priorität: 22.12.1993 DE 4343840
(43) Veröffentlichungstag der Anmeldung: 28.06.1995
(73) Patentinhaber: GRAU GMBH, D-69123 Heidelberg (DE)
(72) Erfinder: Redemann, Bernward, D-69181 Leimen (DE)
(74) Vertreter: Rehberg, Elmar, Dipl.-Ing.

(56) Entgegenhaltungen:
- DE-C- 2 437 027
- DE-C- 2 633 161

## Beschreibung

Die Erfindung bezieht sich auf eine Überwachungseinrichtung für eine vom Zugfahrzeug zum Anhänger führende Bremsleitung an ein Anhängersteuerventil aufweisenden Zweileitungs-Druckluft-Bremsanlagen von Nutzfahrzeugen, mit einem Drosselventil, das mindestens eine ungedrosselte und eine gedrosselte Stellung für eine vom Zugfahrzeug zum Anhänger führende Vorratsleitung aufweist und einen kolbenartigen Ventilkörper besitzt, der auf der einen Seite von einem Steuerdruck zum Anhängersteuerventil und auf der anderen Seite von dem Vorratsdruck der Vorratsleitung vor und nach dem Drosselventil beaufschlagt ist. Die Überwachungseinrichtung dient dazu, die zum Anhänger führende Bremsleitung daraufhin zu überwachen, ob in dieser Bremsleitung ein Leck auftritt. In einem solchen Defektfall wird die Vorratsleitung zum Anhänger und zum Anhängersteuerventil gedrosselt, woraufhin der Druck in der Vorratsleitung nach dem Drosselventil durch das Leck entweicht und dadurch die Notbremseinrichtung des Anhängers aktiviert wird. Zusätzlich wird ein unkontrollierter Druckverlust des Zugfahrzeuges durch das Leck verhindert.

Eine Überwachungseinrichtung der eingangs beschriebenen Art ist aus der DE-PS 26 33 161 bekannt. Die Zweileitungs-Druckluft-Bremsanlage besitzt wie üblich eine Druckluftbeschaffungseinrichtung mit einem Mehrkreisschutzventil und verschiedene den einzelnen Kreisen zugeordnete Vorratsbehälter. Darüberhinaus ist ein Betriebsbremsventil, ein Anhängersteuerventil und ein Drosselventil innerhalb der Bremsanlage vorgesehen. Das Drosselventil weist eine gedrosselte und eine ungedrosselte Stellung auf. Die Vorratsleitung des dritten Kreises zum Anhänger ist über dieses Drosselventil zum Kupplungskopf Vorrat geführt. Wesentliches Element des Drosselventils ist ein kolbenartiger Ventilkörper, der auf der einen Seite von einem der beiden Steuerdrücke beaufschlagt wird, mit denen das Anhängersteuerventil über das zweikreisige Betriebsbremsventil angesteuert wird. Auf der anderen Seite wirkt auf den kolbenartigen Ventilkörper des Drosselventils der Vorratsdruck ein, und zwar der Vorratsdruck in der zum Anhänger geführten Vorratsleitung nach dem Drosselventil. Das Drosselventil wird in Abhängigkeit von einer Druckdifferenz zwischen Steuerdruck und Vorratsdruck geschaltet. Diese Druckdifferenz kann durch konstruktive Maßnahmen am Drosselventil festgelegt werden. Die Druckdifferenz wird so groß gewählt, daß sie bei einer intakten Anlage nicht auftritt, sondern nur bei einer defekten Anlage, bei der also in der zum Anhänger führenden Bremsleitung ein Leck bestimmter Größe auftritt. Dies führt dann zum Umschalten in die gedrosselte Stellung. Die vergleichsweise kleinere Druckdifferenz, die auch bei intakter Anlage zwischen dem ansteigenden Steuerdruck bei einer Vollbremsung und dem dadurch verursachten Luftverbrauch in der Vorratsleitung zum Anhänger auftritt, führt zu einer Bewegung des kolbenartigen Ventilkörpers des Drosselventils, ohne daß die Drosselstellung erreicht wird. Die Teile des Drosselventils werden damit immer in Bewegung gehalten, auch bei intakter Anlage.

Die bekannte Zweileitungs-Druckluft-Bremsanlage geht von der Voraussetzung aus, daß die absolute Höhe des Druckes der Vorratsluft in den beiden Betriebsbremskreisen des Zugfahrzeuges und in dem dritten, zum Anhänger führenden Bremskreis gleich eingestellt sind. Bei einer solchen normalen und intakten Anlage sind die Überströmventile an dem Mehrkreisschutzventil im Betriebszustand des Fahrzeugzuges geöffnet, so daß die einzelnen Kreise hierüber in Verbindung stehen. Dies bedeutet, daß sich in den einzelnen Vorratsbehältern und den den Kreisen nachgeschalteten Anlagenteilen infolge des Arbeitens des Druckreglers zwar unterschiedlich hohe Drücke aufbauen können, die jedoch zu jedem Zeitpunkt etwa gleich groß sind. Gegen Ende einer Vollbremsung wird sich damit der Steuerdruck dem Vorratsdruck angleichen. Diese Angleichung wird sich zwar auf unterschiedlichem Druckniveau ergeben, je nach dem, ob der Druckregler gerade die Leerlaufphase eingeschaltet hat oder nicht. Die zum Schalten des Drosselventils heranzuziehende Druckdifferenz tritt bei einer defekten Anlage relativ eindeutig und erkennbar auf.

Bei neueren Bremsanlagen ist jedoch vorgesehen, die beiden Betriebsbremskreise des Zugfahrzeuges mit einem anderen, insbesondere höheren, Druck zu betreiben als den dritten Bremskreis, der der Anhängerbremsung zugeordnet ist. So kann z. B. in den beiden Betriebbremskreisen ein Druck von 10 bar und in dem Anhängerbremskreis ein Druck von 8,5 bar angestrebt sein. Geht man beispielsweise von der Einstellgenauigkeit eines Druckreglers auf 10 ± 0,2 bar aus und berücksichtigt eine Schaltspanne des Druckreglers von etwa 0,6 bar, dann ergibt sich in den Bremskreisen I und II ein maximal möglicher Druck von 10,2 bar und ein minimal möglicher Druck von 9,2 bar. Wenn dem dritten, der Anhängerbremsung zugeordneten Bremskreis ein Druckminderer vorgeschaltet ist, der zweckmäßig zwischen dem Mehrkreisschutzventil und dem Vorratsbehälter des dritten Kreises angeordnet ist, so möge dieser Druckminderer eine Einstellgenauigkeit seines Abschaltdruckes von 8,5 ± 0,1 bar aufweisen. Berücksichtigt man ferner die Schaltspanne des Druckminderers mit etwa 0,3 bar, dann tritt im dritten Kreis maximal ein Druck von 8,6 bar und minimal ein Druck von 8,1 bar auf. Da der Steuerdruck zum Anhängersteuerventil zugleich auch den Druck darstellt, mit dem der kolbenartige Ventilkörper des Drosselventils auf der einen Seite beaufschlagt wird, können sich diese aufgezeigten Toleranzen an dem Drosselventil ungünstig bemerkbar machen. Bei intakter Anlage können am Drosselventil unterschiedlich große Druckdifferenzen auftreten, die allein aus der zufälligen Überlagerung der Toleranzen am Druckregler und am Druckminderer entstehen. Die maximal mögliche Druckdifferenz ergibt sich gemäß dem obigen Beispiel zu 10,2 - 8,1 = 2,1 bar. Die entsprechende minimale Druckdifferenz ergibt sich zu 9,2 - 8,6 = 0,6 bar. Damit wird es schwierig, die zum Schalten des Drosselventils vorgesehene Druckdifferenz, die den Unterschied zwischen einer defekten und einer intakten Anlage signalisieren soll, feinfühlig auf einen relativ kleinen Wert festzulegen.

Die Erfindung geht von der aufgezeigten Problematik aus. Ihr liegt die Aufgabe zugrunde, eine Überwachungseinrichtung der eingangs beschriebenen Art aufzuzeigen, mit der es möglich ist, das Auftreten eines Lecks bestimmter Größenordnung in der vom Zugfahrzeug zum Anhängerfahrzeug führenden Bremsleitung feinfühlig auch dann zu überwachen, wenn in den Betriebsbremskreisen I und II des Zugfahrzeuges und in dem zum Anhänger führenden Bremskreis III unterschiedlich hohe Vorratsdrücke Anwendung finden.

Erfindungsgemäß wird dies bei einer Überwachungseinrichtung der eingangs beschriebenen Art dadurch erreicht, daß in der zum Drosselventil führenden Leitung für den Steuerdruck zum Anhängersteuerventil ein Druckbegrenzungsventil angeordnet ist, daß dem Drosselventil vorgeschaltet ist.

Die Erfindung geht von dem Gedanken aus, zunächst die Toleranzen im Vorratsdruck der beiden Betriebsbremskreise I und II des Zugfahrzeuges hinsichtlich ihrer Auswirkung auf das Drosselventil auszuschalten und diesen Steuerdruck zum Drosselventil auf einen Druckwert zu begrenzen und zu speichern, der unterhalb des Toleranzbandes zwischen den möglichen Vorratsdrücken in den Betriebsbremskreisen I und II liegt. Mit diesem begrenzten gespeicherten Druck wird die eine Seite des kolbenartigen Ventilkörpers des Drosselventils während einer Vollbremsung beaufschlagt, und zwar unabhängig von dem weiteren Ansteigen des Steuerdruckes bei einer solchen Bremsung. Damit wird die Schwankungsbreite der noch einwirkenden Toleranzen erheblich verkleinert, und die zum Schalten des Druckventils erforderliche Druckdifferenz kann klein genug für ein feinfühliges Arbeiten gewählt werden.

Das Druckbegrenzungsventil ist als Druckminderer ausgebildet, der zuweilen auch als Druckabschneider bezeichnet wird. Die Anwendung eines Druckverhältnisventiles im Sinne eines Druckübersetzers ist an dieser Stelle nicht möglich, weil ein Druckverhältnisventil die auftretenden Toleranzen nicht beseitigt, sondern diese in die Übersetzung mit einfließen.

Das Druckbegrenzungsventil bzw. der Druckminderer können auf einen absoluten Wert einstellbar sein. Hierzu kann der Ventilkörper des Druckminderventils auf einer Feder abgestützt sein, so daß der Steuerdruck gegen den Druck der Feder arbeitet und die Schließstellung des Druckminderventils bei einer bestimmten einstellbaren Zusammendrückung der Feder erreicht wird. Ein solches Druckbegrenzungsventil ist auf einen festen absoluten Wert eingestellt und erbringt dann eine Funktion, daß der Druck mit diesem festen Absolutwert auf dem kolbenartigen Ventilkörper des Drosselventils einwirkt. Auf der anderen Seite des Ventilkörpers des Drosselventils wirkt der Vorratsdruck in der vom Drosselventil zum Anhänger führenden Vorratsleitung ein. Die Druckdifferenz wird zwischen diesen beiden Drücken gebildet. Die Toleranzen hinsichtlich der möglichen absoluten Höhe des Vorratsdruckes in dem dritten Kreis sind hier wirkungsmäßig nicht beseitigt. Dies kann jedoch in Kauf genommen werden, da die möglichen Drucktoleranzen der Vorratsluft im dritten Kreis III ohnehin nur etwa halb so groß sind wie die möglichen Toleranzen in den Betriebsbremskreisen I und II.

Es gibt jedoch eine Möglichkeit, die zugrundeliegende Aufgabe noch besser zu lösen und auch die Toleranzen der auftretenden Drücke im dritten Bremskreis III in ihrer Auswirkung auf das Drosselventil zu vermeiden. Dies geschieht dadurch, daß das Druckbegrenzungsventil so ausgebildet ist, daß es den Druck relativ zu dem zu dem Drosselventil führenden Vorratsdruck der Vorratsleitung begrenzt. Das Druckbegrenzungsventil ist hier nicht auf einen festen Wert eingestellt, sondern ermöglicht es, in bestimmtem Rahmen variable begrenzte Druckwerte auszusteuern, und zwar in Abhängigkeit von dem jeweils im dritten Bremskreis herangeführten Vorratsdruck. Insoweit wird der Ventilkörper des Druckminderventils nicht auf einer Feder abgestützt, sondern auf dem zum Drosselventil herangeführten Vorratsdruck der Vorratsleitung.

Grundsätzlich ist es möglich, das Druckbegrenzungsventil und das Drosselventil als separate Baueinheiten auszubilden und lediglich über entsprechende Leitungen miteinander zu verbinden. Vorteilhaft ist es jedoch möglich, das Druckbegrenzungsventil und das Drosselventil baulich zu vereinigen und in einem gemeinsamen Gehäuse anzuordnen. Dabei entfallen Leitungsverbindungen, und es können gemeinsame Bauteile für das Drosselventil und das Druckbegrenzungsventil genutzt werden. Bei einer weiteren Integration in oder an das Anhängersteuerventil ist die Möglichkeit gegeben, daß das gemeinsame Gehäuse für das Druckbegrenzungsventil und das Drosselventil auch Bestandteil des Gehäuses des Anhängersteuerventils ist. In all diesen Fällen mit Relativbegrenzung des Druckes sind das Druckbegrenzungsventil und das Drosselventil mechanisch gekoppelt. Dabei kann der kolbenartige Ventilkörper des Drosselventils einen Fortsatz zum Betätigen eines Ventilkörpers des Druckbegrenzungsventils aufweisen.

Die Erfindung wird anhand bevorzugter Ausführungsbeispiele weiter beschrieben und erläutert. Es zeigen:
- Figur 1: eine Zweileitungs-Druckluft-Bremsanlage mit den für die Erfindung wesentlichen Teilen,
- Figur 2: eine konstruktive Ausführungsmöglichkeit des Druckbegrenzungsventils und des Drosselventils als singuläre Anlagenteile,
- Figur 3: eine weitere Ausführungsmöglichkeit des Druckbegrenzungsventils in Verbindung mit dem Drosselventil,
- Figur 4: ein Diagramm des Steuerdruckes, des Vorratsdruckes und des ausgesteuerten Bremsdruckes im Verlaufe einer Vollbremsung bei einer intakten Anlage,
- Figur 5: ein Diagramm des Steuerdruckes, des Vorratsdruckes und des angesteuerten Bremsdruckes im Verlaufe einer Vollbremsung bei einer defekten Anlage,
- Figur 6: eine konstruktive Ausführungsform des Druckbegrenzungsventils und des Drosselventils in integrierter Bauweise als Bestandteil des Anhängersteuerventils und
- Figur 7: eine weitere Ausführungsmöglichkeit mit Integration des Druckbegrenzungsventils und des Drosselventils, z. B. an einem Anhängersteuerventil.

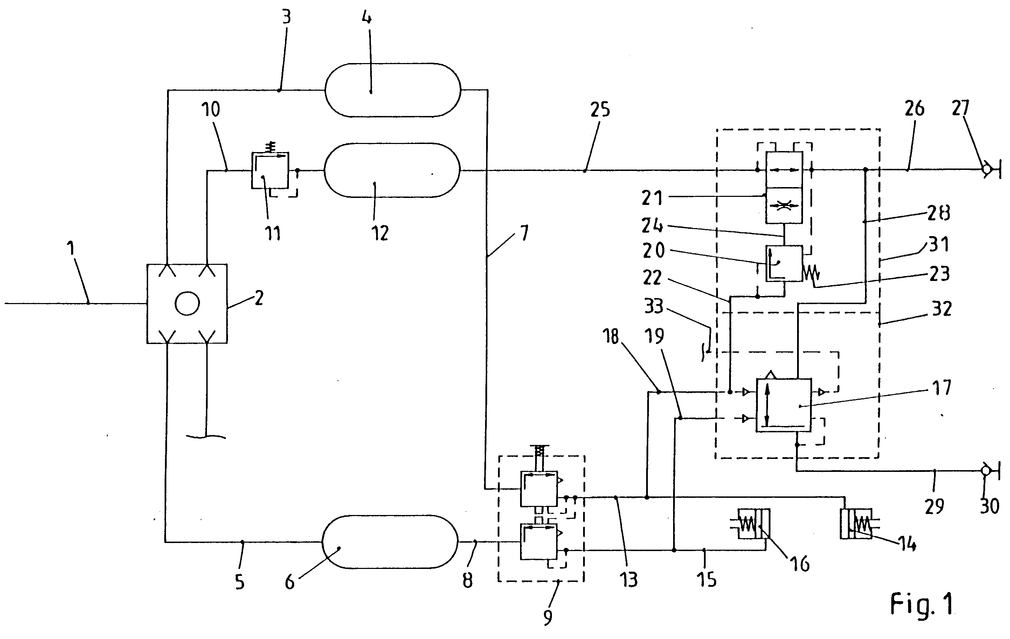

In Figur 1 sind einige wesentliche Elemente einer Zweileitungs-Druckluft-Bremsanlage auf dem Zugfahrzeug dargestellt. Über eine nicht näher gezeigte Druckluftbeschaffungseinrichtung mit Kompressor, Druckregler usw. gelangt Druckluft über eine Leitung 1 zu einem Mehrkreisschutzventil 2, welches in üblicher Weise aufgebaut ist. Von dem Mehrkreisschutzventil 2 zweigt eine Leitung 3 ab, die zu einem Vorratsbehälter 4 führt. Der Vorratsbehälter 4 ist dem Bremskreis I zugeordnet. Von dem Mehrkreisschutzventil 2 zweigt eine Leitung 5 ab, die zu einem Vorratsbehälter 6 führt, der dem Bremskreis II zugeordnet ist. Demzufolge führt von dem Vorratsbehälter 4 eine Leitung 7 und von dem Vorratsbehälter 6 eine Leitung 8 zu einem zweikreisig ausgebildeten Betriebsbremsventil 9.

Von dem Mehrkreisschutzventil 2 führt eine dritte Leitung 10 über einen Druckminderer 11 zu einem Vorratsbehälter 12. Der Vorratsbehälter 12 ist dem Bremskreis III und damit der Anhängerbremsung zugeordnet.

Von dem Betriebsbremsventil 9 führt eine Leitung 13 (Kreis I) zu Bremszylindern 14 an der Hinterachse des Zugfahrzeuges. In der Leitung 13 können weitere Ventile und Aggregate in üblicher Weise vorgesehen sein. Entsprechend für den Kreis II führt eine Leitung 15 zu Bremszylindern 16, die der Vorderachse zugeordnet sein mögen.

Es ist ein Anhängersteuerventil 17 vorgesehen, welches in an sich bekannter Weise ausgebildet ist. Das Anhängersteuerventil 17 ist zweikreisig ansteuerbar, und zwar über eine erste Steuerleitung 18, die von der Leitung 13 (Kreis I) abzweigt. Entsprechend führt eine zweite Steuerleitung 19 (Kreis II) von der Leitung 15 abzweigend zum Anhängersteuerventil 17.

Es ist ein Druckbegrenzungsventil 20 vorgesehen, dem ein Drosselventil 21 nachgeordnet ist. Von der Steuerleitung 18 zweigt eine Steuerleitung 22 ab, die zum Druckbegrenzungsventil 20 führt. Es versteht sich, daß diese Steuerleitung 22 auch von der Steuerleitung 19 abzweigen könnte, um eine entsprechende Wirkverbindung herzustellen. Wichtig ist zu erkennen, daß letztlich dem Druckbegrenzungsventil 20 der von dem Betriebsbremsventil 9 ausgesteuerte Steuerdruck zugeführt wird. Das Druckbegrenzungsventil 20 weist einen hier nicht näher dargestellten kolbenartigen Ventilkörper auf, der in speziellen Ausführungsformen auf einer Feder 23 abgestützt sein kann. Von dem Druckbegrenzungsventil 22 führt eine Leitung 24 zu dem Drosselventil 21. Das Druckbegrenzungsventil 20 und das Drosselventil 21 verfügen über gestrichelt dargestellte Steuerleitungen. Das Drosselventil 21 weist, wie dargestellt, zumindest eine ungedrosselte und eine gedrosselte Stellung auf. Es kann zusätzlich eine Schließstellung besitzen, was aber nicht unbedingt erforderlich ist. Das Drosselventil 21 ist, wie an sich im Stand der Technik bekannt, in eine vom Vorratsbehälter 12 herangeführte Vorratsleitung 25 angeschlossen, während von ihm eine Vorratsleitung 26 ausgeht, die zu einem Kupplungskopf Vorrat 27 am Zugfahrzeug führt. Das Anhängersteuerventil 17 ist über eine Versorgungsleitung 28 an die Vorratsleitung 26 angeschlossen. Vom Anhängersteuerventil 17 führt eine Bremsleitung 29 zu einem Kupplungskopf Bremse 30 in bekannter Weise. Durch eine gestrichelte Umrahmung 31, die das Druckbegrenzungsventil 20 und das Drosselventil 21 umschließt, ist angedeutet, daß diese beiden Ventile baulich zusammengefaßt oder sogar integriert werden können. Ähnliches gilt bezüglich einer Umrahmung 32, die zusätzlich noch das Anhängersteuerventil 17 umschließt. Das Anhängersteuerventil 17 kann über eine Leitung 33 von einer Hilfs- und/oder Feststellbremse zusätzlich angesteuert werden.

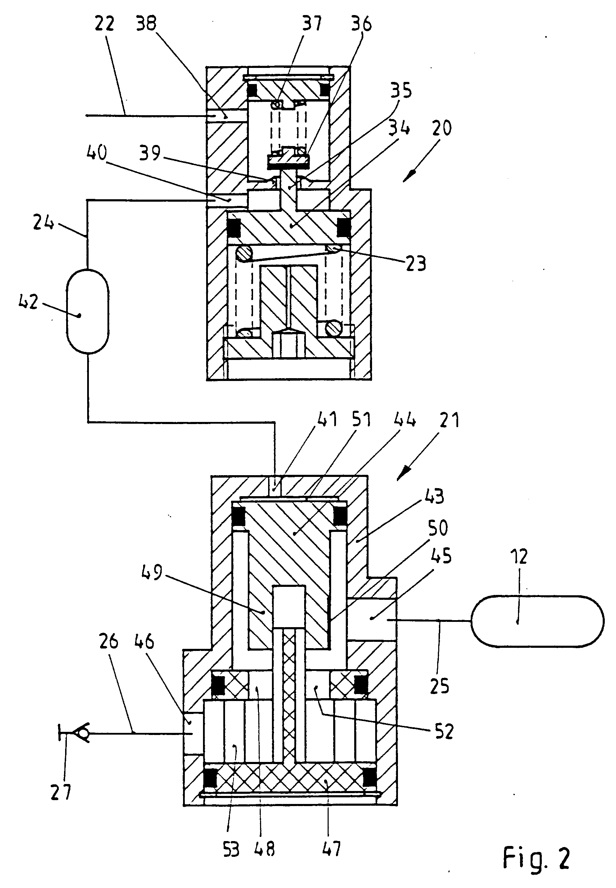

Figur 2 verdeutlicht eine erste konstruktive Ausführungsform für das Druckbegrenzungsventil 20 und das Drosselventil 21 und deren wirkungsmäßige Verbindung. Im Druckbegrenzungsventil 20 ist ein Steuerkolben 34 gleitend und dichtend untergebracht, der auf der hier einstellbar gelagerten Feder 23 abgestützt ist. Damit ist die Höhe des von dem Druckbegrenzungsventil ausgesteuerten Druckes einstellbar. Der Steuerkolben 34 besitzt einen Fortsatz 35, der einer Ventilplatte 36 zugeordnet ist, die über eine Feder 37 gehäuseseitig abgestützt ist. An einem Anschluß 38 ist die Steuerleitung 22 angeschlossen. Die Ventilplatte 36 bildet mit einem eingezogenen Rand 39 ein Absperrventil 36, 39. Von einem Anschluß 40 führt die Leitung 24 zu einem Anschluß 41 an dem Drosselventil 21. In der Leitung 24 kann ein Behälter 42 angeordnet sein, der ein Zusatzvolumen bereitstellt.

Das Drosselventil 21 weist ein Gehäuse 43 auf, in welchem ein kolbenartiger Ventilkörper 44 gleitend und dichtend gelagert ist. An einem Anschluß 45 ist die Vorratsleitung 25, die von dem Vorratsbehälter 12 ausgeht, angeschlossen. Von einem Anschluß 46 geht die Vorratsleitung 26 aus. Im Gehäuse 43 ist in Zuordnung zu dem Ventilkörper 44 ein gehäusefester Einsatz 47 vorgesehen, der in der dargestellten Weise durchbrochen ist, so daß der Teil der Vorratsleitung 25 mit dem Teil der Vorratsleitung 26 in Verbindung steht. Wesentliches Element des Einsatzes 47 ist eine Bohrung 48, die in ihrem Durchmesser auf den Durchmesser eines Fortsatzes 49 an dem kolbenartigen Ventilkörper 44 abgestimmt ist. An dem Fortsatz 49 ist weiterhin eine Drosselbohrung 50 vorgesehen, die länger ausgebildet ist als die Bohrung 48, so daß in der gedrosselten Stellung, wenn also der Fortsatz 49 des Ventilkörpers 44 in die Bohrung 48 mehr oder weniger dichtend eingefahren ist, die Vorratsleitungen 25 und 26 nur noch gedrosselt über die Drosselbohrung 50 miteinander in Verbindung stehen. Der Ventilkörper 44 teilt im Gehäuse 43 einen Steuerraum 51 und einen Vorratsraum 52 ab. Im Einsatz 47 ist eine Durchströmkammer 53 untergebracht, die über den Anschluß 46 dauernd an die Vorratsleitung 26 angeschlossen ist.

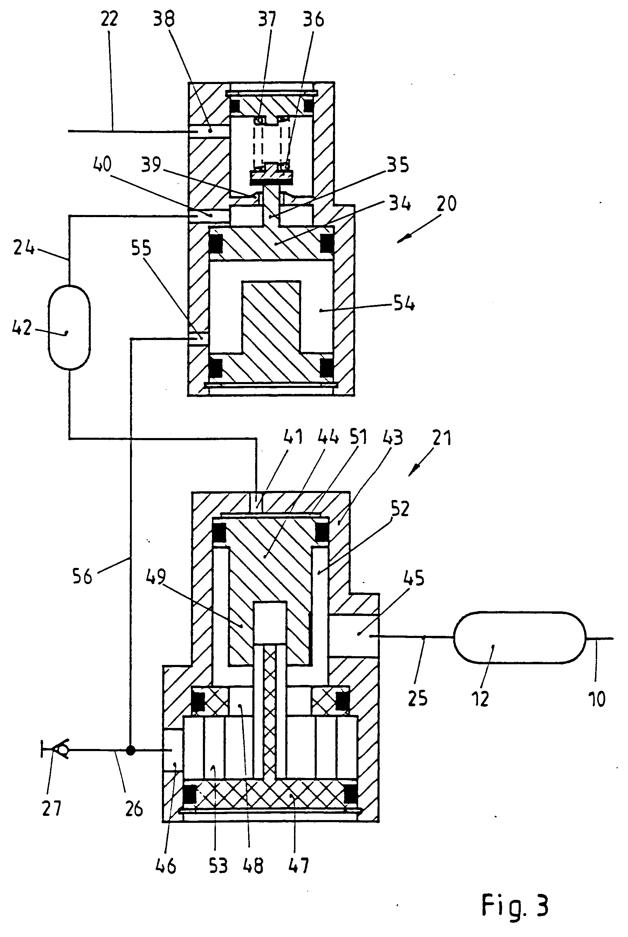

In Figur 3 ist ein weiteres Ausführungsbeispiel für das Druckbegrenzungsventil 20 und das nachgeschaltete Drosselventil 21 dargestellt. Auch hier sind diese Teile als singuläre Anlagenteile vorgesehen. Die Feder 23 fehlt hier an dem Druckminderventil 20. Unterhalb des Steuerkolbens 34 ist ein abgedichteter Wirkraum 54 vorgesehen, an den über einen Anschluß 55 eine Leitung 56 angeschlossen ist, die von der Vorratsleitung 26 abzweigt. Damit ist hier der Steuerkolben 34 nicht auf der Feder 23, sondern gleichsam auf dem Vorratsdruck abgestützt. Dem Steuerdruck in der Leitung 22 wird hier also der Vorratsdruck der Leitung 26 entgegengestellt.

Das Ausführungsbeispiel der Figur 3 könnte auch so abgeändert sein, daß im Wirkraum 54 zusätzlich die aus Figur 2 bekannte Feder 23 eingebaut ist. Damit wird der Abschaltdruck des Druckminderventils 20 gegenüber dem momentanen Vorratsdruck um ein bestimmtes Maß höhergelegt.

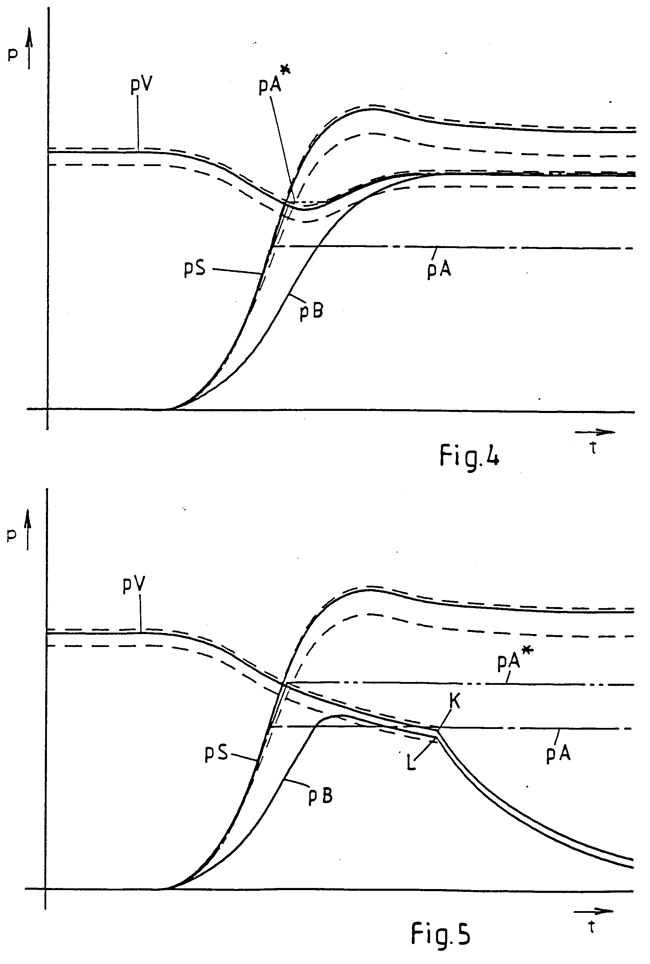

In Figur 4 sind Kennlinien der Druckverläufe über der Zeit, in der eine Vollbremsung stattfindet, verdeutlicht. In durchgezogener Linienführung ist jeweils ein möglicher Druckverlauf dargestellt. In gestrichelter Linienführung sind jeweils Toleranzbänder angedeutet, innerhalb derer sich der durchgezogene Druckverlauf bewegen kann. Die Linie pV zeigt den Druckverlauf in der Vorratsleitung 26, der in der ungedrosselten Stellung des Drosselventils 21 auf dem Verlauf des Druckes in der Vorratsleitung 25 entspricht. Dieser Vorratsdruck möge 8,5 bar nominal betragen. Dieser Druck kann innerhalb des Toleranzbandes zwischen 8,1 und 8,6 bar schwanken. Im Verlaufe einer Vollbremsung über die Zeit wird dieser Vorratsdruck pV infolge Luftverbrauch in den nachgeschalteten Aggregaten sich in der dargestellten Weise ändern, wobei zunächst eine Erniedrigung des Druckes stattfindet und sich dann dieser Druck wieder erholt, jedoch auf einem niedrigeren Niveau, solange vom Kompressor Druckluft nicht nachgefördert wird. Die Linie pS zeigt den Verlauf des Steuerdruckes in der Steuerleitung 22, also vor dem Druckbegrenzungsventil 20. Der Steuerdruck pS beträgt nominal 10 bar. Er kann z. B. zwischen 9,2 und 10,2 bar schwanken. Das diesbezügliche Toleranzband ist also breiter als das Toleranzband des Vorratsdruckes pV. Die durchgezogene Linie pB zeigt den Verlauf des in der Bremsleitung 29 ausgesteuerten Bremsdruckes pB, der maximal den Wert des Vorratsdruckes pV annehmen kann, da das Anhängersteuerventil 17 über die Versorgungsleitung 28 an den Vorratsdruck pV angeschlossen ist. Das Toleranzband des Bremsdruckes pB ist aus Übersichtlichkeitsgründen nicht dargestellt.

Das Ausführungsbeispiel der Überwachungseinrichtung gemäß Figur 2 funktioniert wie folgt. Mit Hilfe des einstellbaren Federauflagers der Feder 23 ist ein konstanter fester Wert des Druckes eingestellt, bei welchem das Druckminderventil 20 seine Schließstellung erreicht und damit den erreichten Druck in der Leitung 24 und dem Behälter 42 absperrt und einschließt. Dieser Abschaltdruck pA ist in den Figuren 4 und 5 in einer einfach gepunktet-gestrichelten Linie dargestellt. Im Verlaufe einer Vollbremsung wird somit der Steuerdruck pS in der Steuerleitung 22 ansteigen. Das Absperrventil 36, 39 ist geöffnet, so daß dieser Druck auch in der Leitung 24, dem Behälter 42 und dem Steuerraum 51 ansteigt. In dem Vorratsraum 52 des Drosselventils 51 steht Vorratsdruck pV an, der zunächst höher ist als der Steuerdruck pS, so daß der kolbenartige Ventilkörper 44 in seiner in Figur 2 gezeichneten Stellung verbleibt. Erreicht der ansteigende Steuerdruck pS den Wert des Abschaltdruckes pA, so schließt das Absperrventil 36, 39, und eine weitere Druckerhöhung des Steuerdruckes pS in der Steuerleitung 22 führt nicht zu einer weiteren Druckerhöhung in der Leitung 24 und im Steuerraum 51. Durch die fortgesetzte Bremsung und den entsprechenden Druckluftverbrauch in der Vorratsleitung 26 sinkt der Vorratsdruck pV zunächst bis zu einem Minimum ab, welches jedoch immer noch oberhalb des Abschaltdruckes pA liegt, so daß der Ventilkörper 44 nicht aus seiner Ausgangslage herausfährt. Das Drosselventil 21 verbleibt somit in der ungedrosselten Stellung gemäß der intakten Anlage nach Figur 4. Nach Durchlaufen des Minimums des Vorratsdruckes pV wird sich dieser Druck wieder ansteigend erholen, und es wird ein entsprechender Bremsdruck pB gemäß dem dargestellten Verlauf ausgesteuert.

Liegt dagegen eine defekte Anlage (Figur 5) vor, beispielsweise ein Leck in der Bremsleitung 29, so wird die Überwachungseinrichtung gemäß Figur 2 das Leck wie folgt feststellen: Der Vorratsdruck pV wird nicht ein Minimum durchlaufen und sich wieder erholen, sondern er wird weiter abfallen, wie dies in Figur 5 dargestellt ist. Zu einem gewissen Zeitpunkt wird der Vorratsdruck pV den Abschaltdruck pA erreichen. Zu diesem Zeitpunkt setzt sich der Ventilkörper 44 in Bewegung und verläßt die ungedrosselte Stellung des Drosselventils 21 in Richtung auf die gedrosselte Stellung. Zur Vereinfachung seien Reibungen und die Expansion im abgesperrten Steuerraum 51 zunächst einmal vernachlässigt. Um diese Expansion nicht zu einem allzu großen Absinken des eingesperrten Druckes führen zu lassen, ist der Behälter 42 vorgesehen, oder jedenfalls das entsprechende Volumen möglichst groß gestaltet. In Fortsetzung dieser Bewegung des Ventilkörpers 44 wird schließlich der Fortsatz 49 in die Bohrung 48 eintauchen, so daß die gedrosselte Stellung erreicht ist und die Vorratsleitungen 25 und 26 nur noch über die Drosselbohrung 50 in Verbindung stehen. Dies ist dort der Fall, wo der Verlauf des Vorratsdruckes pV seinen Knickpunkt K aufweist. Der Verlauf des Vorratsdruckes pV nach dem Knickpunkt K entspricht demjenigen in der Vorratsleitung 26.

Tritt also im Defektfalle ein Leck in der Bremsleitung 29 vor oder nach dem Kupplungskopf Bremse 30 auf, dann geht beim Bremsen Druckluft verloren. Der Verlauf des Bremsdruckes pB kann nicht bis zum Vorratsdruck pV ansteigen, sondern er wird nach Überschreitung eines Maximums abfallen bis zu einem Knickpunkt L, der durch das Schalten des Drosselventils aus der ungedrosselten in die gedrosselte Stellung veranlaßt ist. Wenn die gedrosselte Stellung eingenommen ist, muß nur noch die Vorratsleitung 26 mit den daranhängenden Aggregaten und Leitungsteilen, nicht aber mehr die Vorratsleitung 25 mit dem Vorratsbehälter 12 entlüftet werden, so daß der Bremsdruck pB beschleunigt abfällt. Damit wird zugleich auch der Vorratsdruck nach dem Knickpunkt K, verursacht durch den Knickpunkt L, beschleunigt abfallen, so daß über die Vorratsleitung 26 im Anhänger die gewünschte Notbremsung ausgelöst wird.

Die Ausführungsform der Überwachungseinrichtung gemäß Figur 3 unterscheidet sich von derjenigen gemäß Figur 2 dadurch, daß der Abschaltdruck pA nicht auf einen festen Wert eingestellt wird, sondern auf einen solchen Wert, bei welchem der Steuerdruck pS und der Vorratsdruck pV gleich hoch sind. Je nach der Lage des Steuerdruckes pS und des Vorratsdruckes pV innerhalb ihrer jeweiligen Toleranzbänder können sich damit unterschiedliche Kreuzungspunkte bilden, so daß der Abschaltdruck letztendlich in einem gewissen Bereich schwankend sich einstellen wird. Damit kann der Abschaltdruck pA zwar variieren, er liegt jedoch immer relativ an gleicher Stelle zu den jeweiligen Verhältnissen.

Im Verlauf einer Vollbremsung wird der Steuerdruck pS ansteigen, während der Vorratsdruck pV abfällt. Beide Drucklinien werden einander schneiden. Zu diesem Zeitpunkt wird der Steuerkolben 34 des Druckbegrenzungsventils 20 auf seinen beiden Wirkflächen von einem gleichhohen Druck beaufschlagt, und eine geringfügige Druckerhöhung auf der Seite des Steuerdruckes pS führt zu einem Schließen des Druckbegrenzungsventils 20, so daß der erreichte Druck in der Leitung 24 eingesperrt wird. Dies ist durch eine doppelt gepunktete/gestrichelte Linie in den Figuren 4 und 5 dargestellt, die diesen Abschaltdruck pA* wiedergibt. Der Vorratsdruck pV wird gemäß Figur 4 nachfolgend ein Minimum durchlaufen und wieder ansteigen. Dieser Druckverlauf wird an dem Druckbegrenzungsventil 20 nichts verändern, d. h. das Druckminderventil verbleibt weiterhin in der geschlossenen Stellung. Im Bereich des Drosselventils 21 jedoch wird im Vorratsraum 52 der Vorratsdruck geringfügig absinken, so daß sich der Ventilkörper 44 aus seiner Ausgangsstellung etwas herausbewegt, ohne allerdings die gedrosselte Stellung einzunehmen. Mit dieser Bewegung wird eine Expansion in der Leitung 24, dem Vorratsbehälter 42 und dem Steuerraum 51 stattfinden, so daß auch eine geringfügige Entlastung der Oberseite des Ventilkörpers 44 stattfindet. Sobald der Vorratsdruck pV größer wird als der Abschaltdruck pA*, wird der Vorratsdruck am Druckbegrenzungsventil 20 die Ventilplatte 36 von dem Rand 39 abheben, also das Absperrventil 36, 39 öffnen, so daß Druckluft aus der Steuerleitung 22 in die Leitung 24 nachströmen kann. Es werden sich hier laufend Abschlußstellungen ergeben, so daß die doppelt strichpunktierte Linie des Abschaltdruckes pA* weiterhin deckungsgleich mit dem Vorratsdruck pV verläuft. Dies gilt für die intakte Anlage gemäß Figur 4.

Bei einer defekten Anlage gemäß Figur 5 geht Druckluft über die Bremsleitung 29 verloren, und das Anhängersteuerventil 17 holt sich weiterhin Druckluft über die Versorgungsleitung 28 aus der Vorratsleitung 26, so daß der Vorratsdruck pV nach dem Schnittpunkt mit dem Steuerdruck pS weiterhin abfällt. Bei diesem fortgesetzten Druckabfall wird schließlich im Bremsdruck pB der Knickpunkt L und im Vorratsdruck pV der Knickpunkt K erreicht. Dies ist die Stellung, in welcher das Drosselventil 21 von der ungedrosselten in die gedrosselte Stellung umgeschaltet hat. Der Abfall des Bremsdruckes pB und des Vorratsdruckes pV erfolgt nach den Knickpunkten beschleunigt, so daß damit verläßlich die Notbremsung des Anhängers über die Vorratsleitung 26 ausgesteuert wird.

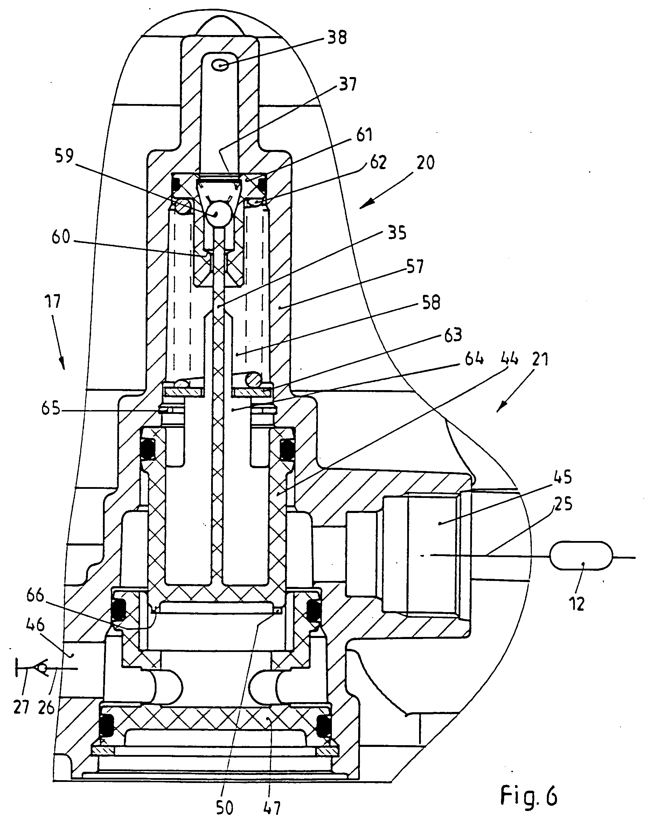

Figur 6 zeigt eine besonders vorteilhafte Ausführungsform des Druckbegrenzungsventils 20 und des Drosselventils 21, integriert an dem Anhängersteuerventil 17. In einem gemeinsamen Gehäuse 57 ist der Einsatz 47 des Drosselventils 21 ortsfest und dichtend gelagert, wie dies bei den Ausführungsbeispielen der Figuren 2 und 3 ebenfalls vorgesehen ist. Im Gehäuse 57 ist der kolbenartige Ventilkörper 44 gleitend und dichtend untergebracht, der jedoch nicht nur die Funktion am Drosselventil 21 erfüllt, sondern zugleich auch die Funktion des Steuerkolbens 34 des Druckminderventils 20 gemäß den Ausführungsformen der Figuren 2 und 3 übernimmt. Demzufolge teilt der Ventilkörper 44 einen Wirkraum 58 ab, der relativ groß gestaltet ist, so daß er auch die Aufgaben des Behälters 42 erfüllen kann. Der Ventilkörper 44 trägt den Fortsatz 35 zum Aufstoßen des Absperrventils des Druckbegrenzungsventils 20. Der Ventilkörper ist hier als Kugel 59 ausgebildet, und ein zugehöriger Sitz 60 ist an einem Kolben 61 vorgesehen, der auf einer Feder 62 abgestützt ist. Das andere Ende der Feder 62 liegt auf einem Federteller 63 auf, welcher sich auf einer Rippe 64 an dem Ventilkörper 44 abstützt. Im Gehäuse 57 ist ein Ring 65 verankert, auf den der Federteller 63 aufsetzt, wenn der Ventilkörper 44 den entsprechenden Weg zurückgelegt hat. Die Feder 62 ist so stark ausgelegt, daß sie bei den möglichen Differenzdrücken den Kolben 61 ortsfest in der dargestellten Stellung hält.

Der Ventilkörper 44 weist an seinem dem Einsatz 47 zugekehrten Ende einen Rand 66 auf, in welchem als radiale Durchbrechung die Drosselbohrung 50 vorgesehen ist. In der gedrosselten Stellung setzt der Rand 66 dichtend auf dem Einsatz 47 auf, und die Vorratsleitungen 25 und 26 sind lediglich noch über die Drosselbohrung 50 verbunden.

Bezüglich der Funktion des Ausführungsbeispieles der Figur 6 kann an sich zunächst grundlegend auf dasjenige der Figur 3 verwiesen werden. Zusätzlich treten aber noch folgende Vorteile auf. Durch die Anordnung und Bemessung der Feder 62 wird sich der Ventilkörper 44 bei einem ansteigenden Steuerdruck pS vergleichsweise früh in Bewegung setzen, bis der Federteller 63 auf dem Ring 65 aufgesetzt hat und die Wirkung der Feder 62 von dem Ventilkörper 44 weggenommen ist. Damit wird erreicht, daß auch bei intakter Anlage schon bei jeder Teilbremsung, die eine gewisse Druckhöhe übersteigt, bewirkt wird. Dabei ist freilich die drosselnde Stellung noch nicht erreicht. Wird im Verlaufe einer Vollbremsung der ansteigende Steuerdruck pS den abfallenden Vorratsdruck pV erreichen, dann nimmt der Ventilkörper 44 nach Zurücklegung eines weiteren Weges und ohne daß das Drosselventil 21 die gedrosselte Stellung einnimmt, das Schließen des Druckbegrenzungsventils 20 herbeigeführt, indem sich die Kugel 59 auf den Sitz 60 aufsetzt und damit das eingeschlossene Volumen absperrt. Ein Abfall des Vorratsdruckes pV bei intakter Anlage und das Durchlaufen eines Minimums führt dann zu einer weiteren geringfügigen Bewegung des Ventilkörpers 44, bei der ebenfalls die gedrosselte Stellung des Drosselventils 21 noch nicht erreicht wird. Erst wenn der Abfall des Vorratsdruckes pV infolge Entlüftung der Vorratsleitung 26 über die Bremsleitung 29 ein bestimmtes Maß überschreitet, wird das Drosselventil 21 die gedrosselte Stellung einnehmen, indem der Ventilkörper 44 auf dem Einsatz 47 aufsetzt. Es spielen sich dann die Vorgänge ab, die anhand der Figur 5 bereits beschrieben wurden.

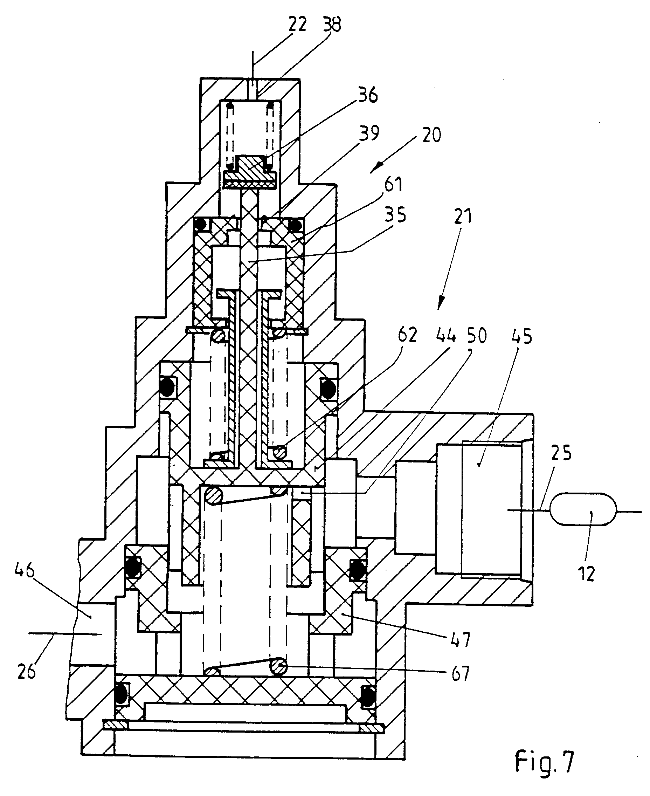

Das in Figur 7 dargestellte weitere Ausführungsbeispiel, bei dem das Druckbegrenzungsventil 20 und das Drosselventil 21 ebenfalls in einer Baueinheit vereinigt sind, kann z. B. an ein Anhängersteuerventil 17 angeflanscht werden. Bezüglich der Ausbildung im einzelnen wird auf die vorangehenden Ausführungsbeispiele verwiesen. Ähnlich wie bei dem Ausführungsbeispiel der Figur 6 ist auch hier eine mechanische Kopplung zwischen dem Druckbegrenzungsventil 20 und dem Drosselventil 21 vorgesehen. Zusätzlich jedoch ist der Ventilkörper 44 auf einer Stellfeder 67 abgestützt, die auch einstellbar verwirklicht sein kann. Je nach der Kraft der Stellfeder 67 wird der Abschaltdruck pA* nicht auf den Schnittpunkt des Steuerdruckes pS und des Vorratsdruckes pV eingestellt, sondern der Abschaltdruck pA* wird entsprechend auf einen höheren Wert festgelegt, der natürlich auch ein Momentanwert ist und innerhalb der Toleranzbänder den Schwankungen des Vorratsdruckes unterworfen ist. Durch die Anordnung der Stellfeder 67 ist es möglich, den Eintritt einer Notbremsung des Anhängers gezielt nur auf eine Vollbremsung mit höherem Druck einzustellen. Damit ist es möglich, in einem großen Bereich von Teilbremsungen des Zugfahrzeuges Notbremsungen des Anhängers zu vermeiden und eine Notbremsung des Anhängers bei einem auftretenden Leck in der Bremsleitung nur dann auszusteuern, wenn auch eine Vollbremsung im Zugfahrzeug ausgesteuert wird.

### BEZUGSZEICHENLISTE

- 1: - Leitung
- 2: - Mehrkreisschutzventil
- 3: - Leitung
- 4: - Vorratsbehälter
- 5: - Leitung
- 6: - Vorratsbehälter
- 7: - Leitung
- 8: - Leitung
- 9: - Betriebsbremsventil
- 10: - Leitung
- 11: - Druckminderer
- 12: - Vorratsbehälter
- 13: - Leitung
- 14: - Bremszylinder
- 15: - Leitung
- 16: - Bremszylinder
- 17: - Anhängersteuerventil
- 18: - Steuerleitung
- 19: - Steuerleitung
- 20: - Druckbegrenzungsventil
- 21: - Drosselventil
- 22: - Steuerleitung
- 23: - Feder
- 24: - Leitung
- 25: - Vorratsleitung
- 26: - Vorratsleitung
- 27: - Kupplungskopf Vorrat
- 28: - Versorgungsleitung
- 29: - Bremsleitung
- 30: - Kupplungskopf Bremse
- 31: - Umrahmung
- 32: - Umrahmung
- 33: - Leitung
- 34: - Steuerkolben
- 35: - Fortsatz
- 36: - Ventilplatte
- 37: - Feder
- 38: - Anschluß
- 39: - Rand
- 40: - Anschluß
- 41: - Anschluß
- 42: - Behälter
- 43: - Gehäuse
- 44: - Ventilkörper
- 45: - Anschluß
- 46: - Anschluß
- 47: - Einsatz
- 48: - Bohrung
- 49: - Fortsatz
- 50: - Drosselbohrung
- 51: - Steuerraum
- 52: - Vorratsraum
- 53: - Durchströmkammer
- 54: - Wirkraum
- 55: - Anschluß
- 56: - Leitung
- 57: - Gehäuse
- 58: - Wirkraum
- 59: - Kugel
- 60: - Sitz
- 61: - Kolben
- 62: - Feder
- 63: - Federteller
- 64: - Rippe
- 65: - Ring
- 66: - Rand
- 67: - Stellfeder

## Patentansprüche

1. Überwachungseinrichtung für eine vom Zugfahrzeug zum Anhänger führende Bremsleitung (29) an ein Anhängersteuerventil (17) aufweisenden Zweileitungs-Druckluft-Bremsanlagen von Nutzfahrzeugen, mit einem Drosselventil (21), das mindestens eine ungedrosselte und eine gedrosselte Stellung für eine vom Zugfahrzeug zum Anhänger führende Vorratsleitung (25, 26) aufweist und einen kolbenartigen Ventilkörper (44) besitzt, der auf der einen Seite von einem Steuerdruck zum Anhängersteuerventil (17) und auf der anderen Seite von dem Vorratsdruck der Vorratsleitung (26) nach dem Drosselventil (21) beaufschlagt ist, dadurch gekennzeichnet, daß in der zum Drosselventil (21) führenden Leitung (22, 24) für den Steuerdruck zum Anhängersteuerventil (17) ein Druckbegrenzungsventil (20) angeordnet ist, das dem Drosselventil (21) vorgeschaltet ist.

2. Überwachungseinrichtung nach Anspruch 1, dadurch gekennzeichnet, daß das Druckbegrenzungsventil (20) als Druckminderer ausgebildet ist, der auf einen absoluten Wert einstellbar ist.

3. Überwachungseinrichtung nach Anspruch 1, dadurch gekennzeichnet, daß das Druckbegrenzungsventil (20) als Druckminderer ausgebildet ist, der den Druck relativ zu dem zu dem Drosselventil (21) führenden Vorratsdruck in der Vorratsleitung (26) begrenzt.

4. Überwachungseinrichtung nach Anspruch 2 oder 3, dadurch gekennzeichnet, daß das Druckbegrenzungsventil (20) und das Drosselventil (21) baulich vereinigt in einem gemeinsamen Gehäuse (57) angeordnet sind.

5. Überwachungseinrichtung nach Anspruch 4, dadurch gekennzeichnet, daß das Druckbegrenzungsventil (20) und das Drosselventil (21) einen gemeinsamen Ventilkörper (44) aufweisen, der anströmseitig zunächst vom ungeminderten und dann vom geminderten Steuerdruck zum Anhängersteuerventil (17) beaufschlagt ist.

6. Überwachungseinrichtung nach Anspruch 4 oder 5, dadurch gekennzeichnet, daß das gemeinsame Gehäuse (57) Bestandteil des Gehäuses des Anhängersteuerventils (17) ist.

7. Überwachungseinrichtung nach Anspruch 3, 4, 5 oder 6, dadurch gekennzeichnet, daß das Druckbegrenzungsventil (20) und das Drosselventil (21) mechanisch gekoppelt sind.

8. Überwachungseinrichtung nach Anspruch 7, dadurch gekennzeichnet, daß der kolbenartige Ventilkörper (44) des Drosselventils (21) einen Fortsatz (35) zum Betätigen eines Ventilkörpers (37, 59) des Druckbegrenzungsventils (20) aufweist.

## Claims

1. Control device for a service line (29) from the tractor-vehicle to the trailer on dual-circuit brake systems of commercial vehicles having a trailer-control valve (17), comprising a throttle valve (21) having at least one non-throttling position and one throttling position for an emergency line (25, 26) between the tractor-vehicle and the trailer and comprising a piston-like valve body (44) being under the action of the control pressure to the trailer-control valve (17) on its one surface and of the emergency pressure of the emergency line (26) after the throttle valve (21) on its other surface, **wherein** a pressure-limiting valve (20) is positioned upstream to the throttle valve (21) in the pipe (22, 24) for the control pressure to the trailer-control valve (17).

2. The control device of claim 1, **wherein** the pressure-limiting valve (20) is designed as a pressure reducing valve being adjustable to an absolute value.

3. The control device of claim 1, **wherein** the pressure-limiting valve (20) is designed as a pressure reducing valve limiting the pressure with respect to the emergency pressure to the throttle valve (21) in the emergency line (26).

4. The control device of claim 2 or 3, **wherein** the pressure-limiting valve (20) and the throttle valve (21) are constructively united and arranged in a common housing (57).

5. The control device of claim 4, **wherein** the pressure-limiting valve (20) and the throttle valve (21) comprise a common valve body (44) the upstream surface of which is first under the action of the non-limited control pressure followed by the limited control pressure to the trailer-control valve (17).

6. The control device of claim 4 or 5, **wherein** the common housing (57) is part of the housing of the trailer-control valve (17).

7. The control device of claim 3, 4, 5 or 6, **wherein** the pressure-limiting valve (20) and the throttle valve (21) are mechanically coupled.

8. The control device of claim 7, **wherein** the piston-like valve body (44) of the throttle valve (21) comprises a projection (35) to actuate a valve body (37, 59) of the pressure-limiting valve (20).

## Revendications

1. Dispositif de contrôle d'une conduite de freinage (29), menant du véhicule tracteur à la remorque, sur des installations de freinage à air comprimé et à deux conduites comportant une vanne pilote de remorque (17), de véhicules utilitaires, avec une vanne d'étranglement (21), qui présente au moins une position non étranglée et une position étranglée pour une conduite de réserve (25, 26), menant du véhicule tracteur à la remorque, et qui possède un corps de vanne (44) du type d'un piston, qui reçoit d'un côté une pression de commande vers la vanne pilote de remorque (17) et sur l'autre côté la pression de réserve de la conduite de réserve (26) vers la vanne d'étranglement (21), caractérisé en ce que dans la conduite (22, 24), menant à la vanne d'étranglement (21), pour la pression de commande vers la vanne pilote de remorque (17), il est prévu une soupape de limitation de pression (20), qui est située en amont de la vanne d'étranglement (21).

2. Dispositif de contrôle selon la revendication 1, caractérisé en ce que la soupape de limitation de pression (20) est un réducteur de pression, que est réglable sur une valeur absolue.

3. Dispositif de contrôle selon la revendication 1, caractérisé en ce que la soupape de limitation de pression (20) est un réducteur de pression, qui limite la pression par rapport à la pression de réserve menant à la vanne d'étranglement (21) dans la conduite de réserve (26).

4. Dispositif de contrôle selon la revendication 2 ou 3, caractérisé en ce que la soupape de limitation de pression (20) et la vanne d'étranglement (21) sont réunies, sur le plan de la construction, dans un boîtier (57) commun.

5. Dispositif de contrôle selon la revendication 4, caractérisé en ce que la soupape de limitation de pression (20) et la vanne d'étranglement (21) présentent un corps (44) commun, qui côté arrivée reçoit la pression de commande d'abord non réduite, puis réduite vers la vanne pilote de remorque (17).

6. Dispositif de contrôle selon la revendication 4 ou 5, caractérisé en ce que le boîtier (57) commun fait partie intégrante du boîtier de la vanne pilote de remorque (17).

7. Dispositif de contrôle selon les revendications 3, 4, 5 ou 6, caractérisé en ce que la soupape de limitation de pression (20) et la vanne d'étranglement (21) sont accouplées mécaniquement.

8. Dispositif de contrôle selon la revendication 7, caractérisé en ce que le corps (44) du type d'un piston de la vanne d'étranglement (21) présente un prolongement (35), pour l'actionnement d'un corps (37, 59) de la soupape de limitation de pression (20).
